# NEUE EUROPÄISCHE PATENTSCHRIFT

(11) **EP 0 423 559 B2**
(45) Veröffentlichungstag und Bekanntmachung des Hinweises auf die Entscheidung über den Einspruch: **29.03.1995**
(45) Hinweis auf die Patenterteilung: 13.01.1993
(21) Anmeldenummer: 90119131.2
(22) Anmeldetag: 05.10.1990
(51) Int. Cl.: B65G 53/64

(54) **Pneumatische Saugförderanlage zum gravimetrischen Zuteilen von Schüttgutkomponenten**
Pneumatic suction conveying plant for gravimetric metering of bulk material components
Installation de transport pneumatique à aspiration pour alimenter gravimétriquement des composants de matières en vrac

(30) Priorität: 20.10.1989 DE 3934910
(43) Veröffentlichungstag der Anmeldung: 24.04.1991
(73) Patentinhaber: AZO GmbH & Co, D-74706 Osterburken (DE)
(72) Erfinder: Link, Otmar, W-6967 Buchen-Götzingen (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 2 361 279
- DE-B- 1 556 104
- DE-B- 2 557 677
- DE-B- 2 614 713
- DE-C- 459 730
- US-A- 3 307 646

## Beschreibung

Die Erfindung betrifft eine pneumatische Saugförderanlage zum gravimetrischen Zuteilen verschiedener schüttfähiger Materialkomponenten zu einer Mehrzahl von Bedarfsstellen mit je eine Komponente enthaltenden Vorratsbehältern, die über je eine Förderleitung mit einem Verteiler verbunden sind, mit einem Abscheider an jeder Bedarfsstelle, der über eine Förderleitung mit dem Verteiler, eine Saugleitung mit Absperrventil mit einem Sauggebläse verbunden und über eine verschließbare Austragsöffnung an der Bedarfsstelle entleerbar ist, und mit einer Steuerung zum bedarfsabhängigen Zuteilen der Komponenten zu den Bedarfsstellen mit je einem Bedarfsmelder, der ein Steuersignal zum Einstellen des Verteilers auf die gewünschte Komponente und zum Aufsteuern des Absperrventils auslöst, und mit einem bei Erreichen einer vorbestimmten Menge ansprechenden Sollwertgeber, der ein Steuersignal zum Öffnen eines Belüftungsventils in der Förderleitung und mit eingestellter Zeitverzögerung zum Schließen des Absperrventils auslöst.

Saugförderanlagen gemäß dem zuvor wiedergegebenen Oberbegriff des Anspruchs 1 gehören zu dem durch Benutzung zugänglich gewordenen Stand der Technik und werden in vielfältiger Weise in der verfahrenstechnischen Materialbehandlung und -verarbeitung eingesetzt. Ein typischer Anwendungsfall ist die Verarbeitung von Kunststoff-Granulat in Spritzgießmaschinen, Extrudern oder dergleichen zu geformten Kunststoffteilen oder Halbfabrikaten. Hierbei wird das Kunststoff-Granulat aus Vorratsbehältern zu den einzelnen Bedarfsstellen, nämlich den Spritzgießmaschinen auf pneumatischm Wege gefördert und muß an der Spritzgießmaschine aus dem Förderstrom abgeschieden werden. Aufgrund der Vielfalt der zur Verarbeitung kommenden Kunststoffe, die sich in ihrem chemischen Aufbau und ihren physikalischen Eigenschaften unterscheiden und wahlweise verabeitet werden sollen, sich aber andererseits nicht vermischen dürfen, weisen solche Kunststoff-Verarbeitungsanlagen eine Vielzahl von Vorratsbehältern auf, von denen jeder eine bestimmte Materialkomponente aufnimmt. Je nach Größe des Betriebs sind 60 und mehr Spritzgießmaschinen zu versorgen. Um eine kontinuierliche Arbeitsweise sämtlicher Spritzgießmaschinen zu ermöglichen, ist die zur Versorgung dienende pneumatische Saugförderanlage so auszulegen, daß einerseits an der Bedarfsstelle bzw. an jeder Spritzgießmaschine ein bestimmter Vorrat an Material bereitgehalten und bei Unterschreiten einer bestimmten Vorratsmenge schnellstmöglich wieder ergänzt wird. Dies erfordert ein ständiges Wechselspiel von Zuschaltungen und Abschaltungen der einzelnen Abscheider an den Spritzgleßmaschinen.

Zu diesem Zweck sind sämtliche Vorratsbehälter über je eine Förderleitung an einem Verteiler angeschlossen, der wiederum über je eine Förderleitung mit dem Abscheider an einer der Bedarfsstellen verbunden ist. Sämtliche Abscheider bzw. ein größerer Teil derselben sind über Absperrventile an eine gemeinsame Saugleitung mit einem einzigen Sauggebläse angeschlossen. Mittels des Verteilers ist es möglich, jede von einem der Vorratsbehälter ankommenden Förderleitung auf eine der zu den Abscheidern führenden Förderleitungen aufzuschalten, so daß jede Bedarfsstelle mit jeder der vorhandenen Komponenten versorgtwerden kann. Um die erwähnte Vorratsmenge an der Bedarfsstelle zu speichern, ist an dieser ein Leermelder angeordnet, der dann anspricht, wenn eine nur noch geringe Menge zur Verfügung steht. Durch das Ansprechen des Leermelders wird der Verteiler auf die entsprechende Komponente geschaltet und das Absperrventil zur Saugleitung geöffnet, so daß die entsprechende Komponente in den Abscheider gefördert wird und von diesem an die Bedarfsstelle gelangt. Ist die erforderliche Vorratsmenge erreicht, so spricht ein das Materialniveau abtastender Sollwertgeber bzw. Vollmelder an, der das Absperrventil zur Saugleitung schließt (DE-AS 26 14 713, DE-OS 21 36 328). Auch ist es bekannt (US-PS 3 386 773), den Abscheider dadurch aus dem Förderstrom herauszunehmen, daß die Förderleitung eingangsseitig verschlossen wird, was allerdings eine zusätzliche Belüftung des Abscheiders voraussetzt, um das Material an die Bedarfsstelle überführen zu können.

Wenn der Vollmelder anspricht, also das am Verbraucher gewünschte Materialvolumen vorhanden ist, ist die gesamte Förderleitung zwischen dem Vorratsbehälter und dem Abscheider noch mit Material gefüllt. Da der im Folgezyklus in die Förderung eingeschaltete Verbraucher in der Regel anderes Material benötigt, muß zumindest die Förderleitung zwischen dem Verteiler und dem Abscheider am Ende jedes Fördertaktes leergesaugt werden, damit es nicht zu Vermischungen und unerwünschten Materialanlieferungen an einer Bedarfsstelle kommt. Das Leersaugen empfiehlt sich darüber hinaus auch dann, wenn lange Förderstrecken zu überwinden sind, da es anderenfalls durch das sich bei kurzfristiger Förderunterbrechung absetzende Material zu Verstopfungen und Anlaufschwierigkeiten kommen kann. Dieser in den Leitungen noch vorhandene "Nachlauf" ist aufgrund der unterschiedlichen Förderwege zwischen den einzelnen Vorratsbehältern und den Bedarfsstellen unterschiedlich groß. Dieser Nachlaufwird bei Ansprechen des Vollmelders durch Öffnen eines Belüftungsventils in der Förderleitung noch in den Abscheider gefördert und aus der Förderluft abgetrennt. Er addiert sich noch zu der vom Vollmelder volumetrisch erfaßten Menge. Die Folge hiervon ist, daß an jeder Bedarfsstelle je nach geförderter Komponente (Entfernung vom Vorratsbehälter) unterschiedliche Vorratsmengen bereitgehalten werden.

Bei Anlagen der genannten Art besteht ein Bedarf dafür, die von einer Bedarfsstelle abgenommenen und verarbeiteten Einzelmengen und die über einen bestimmten Zeitraum abgenommene Gesamtmenge möglichst genau zu kennen, um eine einwandfreie betriebswirtschaftliche Planung und Kostenkalkulation zu ermöglichen.

In der Praxis hat man sich bei Anlagen mit einer Vielzahl von Vorratsbehältern und Verbrauchern bisher damit geholfen, daß zu dem relativ exakt bestimmbaren Volumen, das bis zum Ansprechen des Vollmelders erreicht wird, ein für alle denkbaren Nachlaufmengen durchschnittlicher Wert hinzugerechnet wurde, so daß aus jedem Förderzyklus, währenddessen die Bedarfsstelle versorgt wurde, auf das verarbeitete Materialvolumen geschlossen werden kann. Diese Methode ist naturgemäß ungenau und kann zu statistisch einigermaßen gesicherten Ergebnissen nur führen, wenn jede Bedarfsstelle jede Materialkomponente in statistisch gleichbleibenden Intervallen abnimmt. Diese Voraussetzung ist in den wenigsten Fällen erfüllt. Im übrigen ist dieser Volumenzuschlag um so weniger repräsentativ, je größer die Anlage ist.

Bei der Versorgung nur einer Bedarfsstelle mit mehreren Komponenten ist es problemlos möglich, genau abgemessene Mengen zuzuführen, da in diesem Fall die Förderleitung unmittelbar vor dem Abscheider verschlossen oder belüftet und das Material in der Förderleitung verbleiben kann (DE-OS 25 28 518). Diese Methode versagt jedoch bei mehreren Bedarfsstellen, die aus gleichen Vorratsbehältern versorgt werden. Auch ist es mit den bekannten Anlagen nicht möglich, eine gravimetrische Zuteilung zu ermöglichen, die bekanntlich eine exaktere Erfassung des Verbrauchs ermöglicht.

Bei einer bekannten, gravimetrisch arbeitenden Anlage (US-A-3307 646) sind zwei parallel liegende Abscheider in einem einzigen Behälter angeordnet und ist jedem Abscheider ein Wiegebehälter zugeordnet, dessen in den Behälter mündender Ablauf von einem Ventil verschlossen ist. Das Produkt wird über eine Weiche wahlweise dem einen oder anderen Abscheider im Saugverfahren zugeführt und in dem jeweils darunter befindlichen Wiegebehälter verwogen. Nach Erreichen des Sollgewichtes wird das Ventil geöffnet und fällt das Produkt in den Behälter, aus dem es durch ein Zellenrad in eine zur Bedarfsstelle führende Druckförderleitung gelangt. Durch Umschalten der Weiche auf den jeweils leeren Wiegebehälter soll die Zuführung abgwogener Mengen zur Bedarfsstelle kontinuierlich gestaltet werden. Mit dieser Anlage können jedoch nicht verschiedene Materialkomponenten ausgewählten verschiedenen Bedarfsstellen zugeteilt werden.

Bei einer anderen gravimetrisch arbeitenden Anlage (DE-A-2361279) werden die Komponenten aus mehreren Vorratsbehältern durch Saugförderung einem Wiegebehälter, der zugleich einen Abscheider bildet, zugeführt. Um beim Abschalten den Nachlauf in das Wiegeergebnis einzubeziehen bzw. für alle Komponenten etwa gleich groß zu halten, ist vor dem Wiegebehälter ein Ventilblock mit einem zentralen Belüftungsventil für jede Komponentenleitung vorgesehen. Der Abstand jedes Ventils bis zum Behälter ist etwa gleich lang. Beim Belüften wird das zwischen dem Ventil und dem Wiegebehälter befindliche Material nachgesaugt und mit verwogen.

Der Erfindung liegt die Aufgabe zugrunde, eine gravimetrisch exakte Zuteilung der Materialkomponenten zu allen Bedarfsstellen zu ermöglichen und somit den Materialverbrauch an jeder Bedarfsstelle pro Förderzyklus oder über eine größere Zeitdauer aus der Anzahl der Förderzyklen bestimmen zu können.

Ausgehend von der eingangs genannten Anlage wird diese Aufgabe erfindungsgemäß dadurch gelöst, daß jeder Abscheider aus zwei Kammern besteht, von denen die untere die verschließbare Austragsöffnung aufweist, während die obere Kammer Anschlüsse für die Förderleitung, die Saugleitung und darunter einen das abgeschiedene Material aufnehmenden, über einen Kraftaufnehmer abgestützten Wiegebehälter mit einem bodenseitigen Materialablauf in die untere Kammer und einem Verschluß in Form eines das Material lediglich zurückhaltenden, die Kammern (415, 416) jedoch nicht luftdicht trennenden Stauorgans aufweist, der bei Ansprechen des Bedarfsmelders in die Schließstellung und bei Ansprechen des vom Kraftaufnehmer aktivierten Sollwertgebers mit der eingestellten Zeitverzögerung in die Öffnungsstellung bringbar ist.

Die Arbeitsweise der erfindungsgemäßen Saugförderanlage ist folgende: Ist der an der Bedarfsstelle vorhandene Materialvorrat bis auf eine Restmenge verbraucht, steuert der Bedarfsmelder das Stauorgan an dem Materialablauf des Wiegehehälters zu und das Absperrventil in der Saugleitung auf. Zuvor wird der Verteiler auf die Förderleitung desjenigen Vorratsbehälters eingestellt, der die gewünschte Komponente enthält: der Förderzyklus beginnt. Die geförderte Komponente wird in der oberen Kammer aus dem Förderstrom abgeschieden und gelangt in den Wiegebehälter, der einen Teil der oberen Kammer bildet. Ist im Wiegebehälter das am Sollwertgeber eingestellte Gewicht erreicht, so wird die Förderung durch Öffnen des Belüftungsventils, das vom Sollwertgeber angesteuert wird, unterbrochen, so daß das noch in der Leitung vorhandene Material - der Nachlauf - in den Wiegebehälter gelangt und vom Kraftaufnehmer gemessen wird. Mit einer voreingestellten Zeitverzögerung werden das Belüftungsventil und das Absperrventil geschlossen und das Stauorgan am Wiegebehälter geöffnet, so daß die exakt verwogene Menge in die untere Kammer und - beigeöffneter Austragsöffnung - an die Bedarfsstelle gelangt.

Die Zeitverzögerung für das Schließen des Belüftungsventils kann als empirisch festgestellter Absolutwert für den gesamten Wiegevorgang vorangestellt werden, es kann aber auch das das Belüftungsventil aufsteuernde Steuersignal so lange anstehen, bis der Kraftaufnehmer keine Gewichtsänderung mehr registriert, und dann mit einer kurzen Zeitverzögerung das Belüftungsventil und das Absperrventil zugesteuert und der Verschluß aufgesteuert werden. In jedem Fall ist gewährleistet, daß das exakte Gewicht bei jedem Förderzyklus und - über einen Bilanzspeicher - das über eine größere Zeitdauer abgenommene Gewicht an jeder Bedarfsstelle festgestellt werden kann.

Der der Austragsöffnung derunteren Kammer zugeordnete Verschluß kann in beliebiger herkömmlicher Weise gestaltet sein. Vorteilhafterweise weist die Austragsöffnung zur Seite hin und ist durch eine Schwenkklappe verschlossen, da hierdurch am einfachsten das Einklemmen von Material zwischen Klappe und Öffnungsrand vermieden wird, Die Klappe kann zwangsgesteuert sein oder aber, wie gleichfalls bekannt und bevorzugt, als Pendelklappe ausgebildet sein, die so lange in Öffnungsstellung gehalten wird, als sich Material in ihrem Bewegungsbereich befindet, und erst wenn dieses abgeflossen ist selbsttätig schließt und beim Schließen den Bedarfsmelder aktiviert. Eine solche unter Schwerkraft selbsttätig schließende Pendelklappe hat den Vorteil eines besonders einfachen Aufbaus. Sie wird während des Fördervorgangs, der durch ihre Schließbewegung und die dadurch erfolgende Aktivierung des Leermelders in Gang gesetzt wird, unter Wirkung des Unterdrucks dicht an die Austragsöffnung herangezogen.

Da der Abschluß für den Materialablauf des Wiegebehälters ein das Material lediglich zurückhaltendes, die Kammern jedoch nicht luftdicht trennendes Stauorgan ist, ist zwischen der unteren und der oberen Kammer durch deren Ablauf hindurch eine pneumatisch offene Verbindung vorhanden, so daß auch während des Nachsaugens des Nachlaufs die Pendelklappe durch den Unterdruck zugehalten wird. Andererseits hält aber das Stauorgan das im Wiegebehälter befindliche Material zurück. Es kann zwischen oberer und unterer Kammer auch eine zusätzliche, offene Verbindung außerhalb des Wiegebehälters vorhanden sein. Wird das Absperrventil zur Saugleitung geschlossen und bricht der Unterdruck im Abscheider zusammen, so wird durch das Stauorgan hindurch auch die untere Kammer belüftet und kann die Pendelklappe nach Öffnen des Stauorgans des Wiegebehälters unter Wirkung der Schwerkraft des auffallenden Materials öffnen, so daß das abgemessene Materialvolumen an die Bedarfsstelle gelangen kann. Die Pendelklappe bleibt dann so lange geöffnet, wie sich noch Material in der unteren Kammer des Abscheiders befindet und schießt erst dann, wenn sie von dem unterhalb der Auslauföffnung an der Bedarfsstelle befindlichen Material freikommt.

In vorteilhafter Ausführung ist das Stauorgan eine mit geringem Abstand unterhalb des Materialablaufs bewegte Stauscheibe. Der Abstand und die Überdeckung der Auslauföffnung durch die Stauscheibe ist so gewählt, daß das in der oberen Kammer bzw. im Wiegebehälter zurückgehaltene Material nicht unter eigener Schwerkraft durch den Spalt hindurchrutschen kann, andererseits aber obere Kammer und untere Kammer pneumatisch verbunden sind.

In einer einfachsten Ausführung besteht die obere Kammer aus dem eigentlichen Abscheideraum und dem darunter angeordneten Wiegebehälter, wobei der Abscheideraum ein konisches, in den oben offenen Wiegebehälter hineinragendes Übergangsstück aufweist. Auf diese Weise kann der Wiegebehälter vom Abscheideraum entkoppelt angeordnet werden, so daß er bzw. der Kraftaufnehmer das tatsächliche Gewicht unbeeinflußt aufnehmen kann. Beispielsweise kann der Wiegebehälter an einer Wandung des Abscheiders über den Kraftaufnehmer abgestützt sein.

Gemäß einem weiteren Ausführungsbeispiel ist vorgesehen, daß dem Wiegebehälter eine Lagerung für die an seinem Ablauf angeordnete Stauscheibe zugeordnet ist, so daß die Stauscheibe den Bewegungen des Wiegebehälters folgt und eine stets gleichbleibende Zuordnung von Stauscheibe und Materialablauf am Wiegebehälter d. h. eine gleichbleibende Spaltbreite gewährleistet ist.

Der Stauscheibe ist vorteilhafterweise ein Antrieb zugeordnet, der beispielsweise am Abscheider innenseitig fest angebracht und über eine den Wiegebehälter nicht beeinflussende Kupplung mit der Stauscheibe in Wirkverbindung steht.

Es ist natürlich auch möglich den Antrieb unmittelbar am Wegebehälter anzuordnen, doch ist die erstgenannte Ausführung insoweit günstiger, als sie einen einfacheren Ausbau des Wiegebehälters, beispielsweise für Reinigungszwecke, gestattet.

Eine hinsichtlich Bauaufwand und Platzbedarf besonders günstige Ausführung zeichnet sich dadurch aus, daß der Abscheider von einem im wesentlichen zylindrischen Behälter gebildet ist, der in seinem oberen Bereich die obere Kammer mit dem Abscheideraum und dem Wiegebehälter, der konzentrisch in dem Abscheider-Behälter eingesetzt ist, und darunter die untere Kammer aufweist.

Es ist ferner von Vorteil, wenn die untere Kammer einen in den Abscheider-Behältereingesetzten Trichterboden aufweist, der an seinem unteren Ende von der Pendelklappe verschlossen ist und einen Austrag ausschließlich unter Schwerkraft gestattet.

Schließlich ist erfindungsgemäß vorgesehen, daß der Verteiler eine Rohrweiche ist, die wahlweise eine der von den Vorratsbehältern kommenden mit einer zu den Abscheidern führenden Förderleitungen verbindet, und daß für letztere ein einziges Belüftungsventil vorgesehen ist, das am Eingang der Rohrweiche angeordnet ist.

Diese Ausbildung hat den Vorteil, daß der nach Ansprechen des Sollwertgebers noch vorhandene Nachlauf sich auf denjenigen Teil der Förderleitung beschränkt, der sich zwischen dem Verteilerund dem Abscheider befindet. Damit kann das im Abscheider für die Aufnahme des Nachlaufs notwendige Volumen minimiert werden. Gleichwohl wird das Fördersystem in demjenigen Umfang leergesaugt, wie dies zur Vermeidung von Vermischungen und Fehlzuteilungen notwendig ist. Hin gegen setzt sich das in den Förderleitungen zwischen den Vorratsbehältern und dem Verteiler vorhandene Material in den Leitungen ab. Dies hat den Vorteil, daß bei Beginn eines Förderzyklus diese Förderleitungen nicht erst gefüllt werden müssen, sondern das Material relativ schnell am Abscheider zur Verfügung steht. Derwesentliche Vorteil gegenüber herkömmlichen Anlagen mit Belüftungsventilen unmittelbar im Bereich jedes Vorratsbehälters liegt jedoch darin, daß nur noch ein einziges Belüftungsventil notwendig ist, wodurch Herstellungs- und Montagekosten vor allem bei einer großen Anzahl von Vorratsbehältern ganz erheblich reduziert werden können. Auch werden die möglichen Funktionsstörungen und notwendigen Inspektionen gegenüber einer Vielzahl von Belüftungsventilen vermindert.

Nachstehend ist die Erfindung anhand eines in der Zeichnung wiedergegebenen Ausführungsbeispiels beschrieben. In der Zeichnung zeigen:
Figur 1 ein schematisches Fließbild einer Saugförderanlage und
Figur 2 einen Schnitt durch einen Abscheider in vergrößertem Maßstab.

Die in der Zeichnung wiedergegebene Saugförderanlage weist mehrere Vorratsbehälter 11, 12, 13, 14, 15 und 16, also insgesamt sechs Vorratsbehälter auf, die jeweils eine bestimmte Materialkomponente enthalten. Aus den Vorratsbehältern 11 bis 16 werden mehrere - beim gezeigten Ausführungsbeispiel sieben - Verbraucher 21 bis 27 versorgt. Im vorliegenden Fall handelt es sich um eine Kunststoff-Verarbeitungsanlage, bei der die Vorratsbehälter 11 bis 16 jeweils ein Granulat unterschiedlicher chemischer Zusammensetzung und/oder physikalischer Eigenschaften enthalten und die Verbraucher 21 bis 27 als das Granulat plastifizierende Extruder ausgebildet sind.

Jedem Verbraucher 21 bis 27 ist ein Beschickungsbehälter 31 bis 37 in Form eines Aufgabetrichters zugeordnet, auf dem wiederum je ein Abscheider 41 bis 47 sitzt.

Zwischen den Vorratsbehältern 11 bis 16 und den Abscheidern 41 bis 47 ist ein Verteiler 1, z. B. in Form einer Rohrweiche angeordnet. Jeder Vorratsbehälter 11 bis 16 ist über eine Förderleitung 51 bis 56 mit dem Eingang des Verteilers 1 und jeder Abscheider 41 bis 47 über je eine Förderleitung 61 bis 67 mit dem Ausgang des Verteilers 1 verbunden. Ferner ist am Ende der Förderstrecke ein Sauggebläse 2 mit vorgeschaltetem Abscheider 3 angeordnet, mit dem die Abscheider 41 bis 47 über eine Saugleitung 4 verbunden sind. Dabei ist zwischen jedem Abscheider 41 bis 47 und der Saugleitung 4 je ein Absperrventil 71 bis 77 angeordnet. Bei dem gezeigten Ausführungsbeispiel ist ferner jeder vom Vorratsbehälter 11 bis 16 kommenden Förderleitung 51 bis 56 ein Belüftungsventil 81 bis 86 zugeordnet.

Jeder Abscheider 41 bis 47 weist einen konischen Boden 410 mit einer zur Seite hin weisenden Austragsöffnung 411 auf, die durch eine im Beschickungsbehälter 31 bis 37 angeordnete, unter Schwerkraft schließende Pendelklappe 412 verschließbar ist. Die Pendelklappe 412 wird, solange im Abscheider Unterdruck herrscht, dicht an den Rand der Austragsöffnung 411 herangezogen. Umgekehrt wird die Pendelklappe 412 in die Öffnungslage gedrängt, solange sich in einer Förderpause Material zwischen dem Abscheider und dem Beschickungsbehälter befindet. Der Pendelklappe 412 ist ein Leermelder 413 zugeordnet, der dann anspricht, wenn das Material die Pendelklappe 412 vollständig freigegeben hat und sich diese in die Schließlage bewegt. In diesem Augenblick wird das diesem Abscheider zugeordnete Absperrventil 71 bis 77 geöffnet, der Unterdruck im Abscheider und in der zugehörigen Förderleitung aufgebaut und die Materialkomponente aus einem der Vorratsbehälter 11 bis 16 in den Abscheider gefördert.

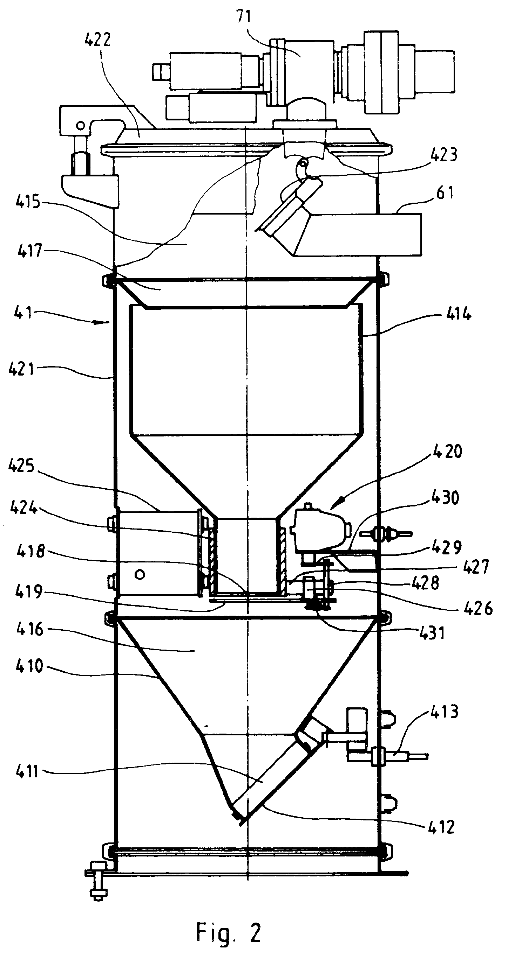

Jeder Abscheider 41 bis 47 besteht, wie in Figur 2 anhand des Abscheiders 41 gezeigt, aus zwei Kammern 415 und 416. An die obere Kammer 415, und zwar in deren oberen Bereich, der den eigentlichen Abscheideraum bildet, ist je eine der Förderleitungen 61 bis 67 und die Saugleitung 4 über je eines der Absperrventile 71 bis 77 angeschlossen. Die obere Kammer 415 weist ein konisches Übergangsstück 417 auf, das in einen Wegebehälter 414 von oben hineinragt. Der Wiegebehälter 414 weist einen Ablauf 418 auf, dem ein darunter befindlicher Abschluß 419 in Form einer Stauscheibe zugeordnet ist. Die Stauscheibe 419 kann beispielsweise mittels eines pneumatischen Schwenkantriebs 420 betätigt werden. Die Stauscheibe 419 ist, wie aus der Zeichnung ersichtlich, mit geringem Abstand unterhalb des Ablaufs 418 angeordnet, so daß sie den Ablauf nicht dicht abschließt.

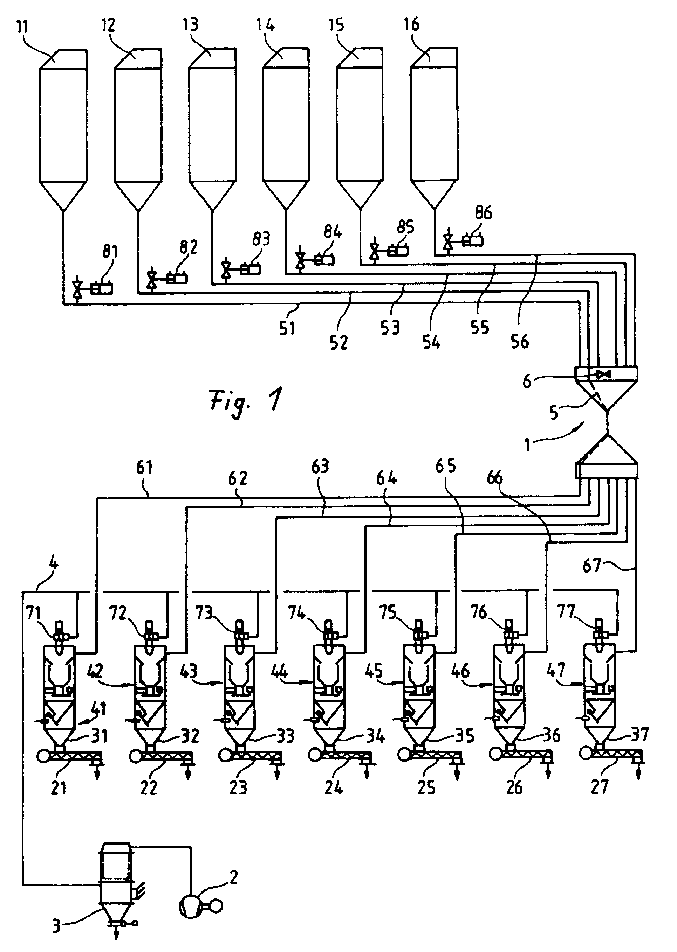

Der Abscheider 41 ist von einem im wesentlichen zylindrischen Behälter 421 und einem ihn oberseitig abschließenden Deckel 422 gebildet, der ein nichtgezeigtes Filter aufnimmt und an den die Saugleitung 4 (siehe Figur 1) über das Absperrventil 71 angeschlossen ist. Die in den Abscheideraum der oberen Kammer 415 einmündende Förderleitung 61 ist mit einer Rückschlagklappe 423 versehen.

Der Wiegebehälter 414 ist mit seinem unteren Ende in ein Tragrohr 424 lose eingesetzt, das seinerseits über einen Kraftaufnehmer 425 an der Wandung des Abscheider-Behälters 421 abgestützt ist. Der Kraftaufnehmer 425 mißt das Gewicht des aus dem Abscheideraum in den Wiegebehälter 414 gelangenden Materials. Die den Materialablauf 418 des Wiegebehälters 414 verschließende Stauscheibe 419 sitzt an einem Schwenkzapfen 426, der wiederum in einem Ansatz 427 des Tragrohrs 424 gelagert ist. Die Stauscheibe 419 weist ferner jenseits des Schwenkzapfens 426 einen Mitnehmerstift 428 auf, der von der Seite her von einer Gabel 429 übergriffen ist und zusammen mit dieser eine Kupplung zwischen dem Schwenkantrieb 420 und der Stauscheibe 419 bildet. Der Schwenkantrieb 420 ist auf einer Konsole 430 angeordnet, die ihrerseits an dem Abscheider-Behälter 421 befestigt ist. Die aus der Gabel 429 und dem Mitnehmerstift 428 gebildete Kupplung gestattet eine freie Bewegung des Wiegebehälters 414. Zwischen dem Mitnehmerstift 428 und dem Ansatz 427 ist eine Feder 431 angeordnet, die den Mitnehmerstift 428 in der Öffnungs- und Schließstellung der Stauscheibe 419 gegen Anschläge zieht und somit in definierten Positionen hält.

### Die Arbeitsweise der Anlage ist folgende:

Es sei angenommen, daß der Beschickungsbehälter 31 des Verbrauchers 21 soweit entleert ist, daß die Pendelklappe 412 von dem im Beschickungsbehälter 31 befindlichen Material freikommt und in die Schließlage geht. Ferner sei angenommen, daß der Verbraucher 21 die im Vorratsbehälter 12 lagernde Materialkomponente verarbeitet. Es wird deshalb der Verteiler 1 auf den mit gestrichelten Linien (Figur 1) wiedergegebenen Weg eingestellt. Der Bedarfsmelder 413, der durch das Schließen der Pendelklappe 412 anspricht, steuert den Schwenkantrieb 420 an, der die Stauscheibe 419 in die Schließstellung bewegt. Ferner wird vom Bedarfsmelder 413 das Absperrventil 71 des Abscheiders 41 aufgesteuert, so daß sich der Unterdruck im Abscheider 41 und von dort über die Förderleitung 61, den Verteiler 1 und die Förderleitung 52 aufbaut, bis die Förderung beginnt.

Die im Saugstrom geförderte Materialkomponente gelangt in den Abscheideraum der oberen Kammer 415 (die Rückschlagklappe 423 ist aufgrund des Unterdrucks geöffnet), wird durch Fliehkraft und Schwerkraft abgeschieden und fällt in den Wiegebehälter 414. Die Förderung läuft so lange bis der Kraftaufnehmer 425 ein bestimmtes Gewicht - den Sollwert - registriert. Ein entsprechender Sollwertgeber in der nicht gezeigten Steuerung spricht an und gibt ein Steuersignal an das Belüftungsventil 82 (Figur 1), so daß dieses letzteres öffnet und das noch in den Förderleitungen 52 und 61 befindliche Material in den Abscheider 41 und somit in den Wiegebehälter gelangt. Mit einer empirisch festgestellten Zeitverzögerung werden das Belüftungsventil 82 und das Absperrventil 71 geschlossen. Der Förderzyklus ist für diesen Verbraucher 23 beendet. Zugleich wird die Stauscheibe 419 mittels des Schwenkantriebs 420 geöffnet, so daß das Material überden konischen Boden auf die Pendelklappe 412 fällt und diese aufgrund des Materialgewichtes öffnet. Das Material baut sich im Beschickungsbehälter 31 und auf dem Boden 413 auf und hält die Pendelklappe 412 geöffnet.

Der Verbraucher verarbeitet das im Beschickungsbehälter 33 und in derunteren Kammer 416 des Abscheiders 41 befindliche Material, bis schließlich die Pendelklappe wieder freikommt und schließt. Der dann ansprechende Bedarfsmelder initiiert einen neuen Förderzyklus.

Statt der beschriebenen Belüftungsventile 81 bis 86 (Figur 1) ist vorzugsweise vorgesehen, daß am Verteiler 1, nämlich an der die Förderleitungen 51 bis 56 und 61 bis 67 verbindenden Rohrweiche 5 eingangsseitig ein einziges Belüftungsventil 6 angeordnet ist, so daß nur noch der innerhalb der Rohrweiche 5 und innerhalb einer der Förderleitungen 61 bis 67 vorhandene Nachlauf in den Abscheider 41 bis 47 gelangt. Dieses einzige Belüftungsventil 6 wird mit der Rohrweiche 5 mitbewegt, so daß stets sichergestellt ist, daß nach einem Förderzyklus innerhalb des Verteilers 1 und der Förderleitungen 61 bis 67 kein Produkt mehr vorhanden ist.

## Patentansprüche

1. Pneumatische Saugförderanlage zum gravimetrischen Zuteilen verschiedener schüttfähiger Materialkomponenten zu einer Mehrzahl von Bedarfsstellen (21 bis 27) mit je eine Komponente enthaltenden Vorratsbehältern (11 bis 16), die über je eine Förderleitung (51 bis 56) mit einem Verteiler (1) verbunden sind, mit einem Abscheider (41 bis 47) an jeder Bedarfsstelle (21 bis 27), der über eine Förderleitung (61 bis 67) mit dem Verteiler (1), eine Saugleitung (4) mit Absperrventil (71 bis 77) mit einem Sauggebläse (2) verbunden und über eine verschließbare Austragsöffnung (411, 412) an der Bedarfsstelle (21 bis 27) entleerbar ist und mit einer Steuerung zum bedarfsabhängigen Zuteilen der Komponenten zu den Bedarfsstellen mit je einem Bedarfsmelder (413) der ein Steuersignal zum Einstellen des Verteilers (1) auf die gewünschte Komponente und zum Aufsteuern des Absperrventils (71 bis 77) auslöst, und mit einem bei Erreichen einer vorbestimmten Menge ansprechenden Sollwertgeber, der ein Steuersignal zum Öffnen eines Belüftungsventils (6; 81 bis 86) in der Förderleitung und mit eingestellter Zeitverzögerung zum Schließen des Absperrventils (71 bis 77) auslöst, dadurch gekennzeichnet, daß jeder Abscheider aus zwei Kammern (415, 416) besteht, von denen die untere (416) die verschließbare Austragsöffnung (411) aufweist, während die obere Kammer Anschlüsse für die Förderleitung (61 bis 67), die Saugleitung (4) und darunter einen das abgeschiedene Material aufnehmenden, über einen Kraftaufnehmer (425) abgestützten Wiegebehälter (414) mit einem bodenseitigen Materialablauf (418) in die untere Kammer (416) und einem Verschluß (419) in Form eines das Material lediglich zurückhaltende, die Kammeren (415, 416) jedoch nicht luftdicht trennenden Stauorgans (419), aufweist, das bei Ansprechen des Bedarfsmelders (413) in die Schließstellung und bei Ansprechen des vom Kraftaufnehmer (425) aktivierten Sollwertgebers mit der eingestellten Zeitverzögerung in die Öffnungsstellung bringbar ist.

2. Saugförderanlage nach Anspruch 1, dadurch gekennzeichnet, daß der Austragsöffnung (411) der unteren Kammer (416) als Verschluß eine unter Schwerkraft selbsttätig schließende Pendelklappe (412) zugeordnet ist, die unter Wirkung von in ihrem Bewegungsbereich liegenden Material geöffnet ist und beim Schließen den Bedarfsmelder (413) aktiviert.

3. Saugförderanlage nach Anspruch 1 oder 2 dadurch gekennzeichnet, daß das Stauorgan eine mit geringem Abstand unterhalb des Materialablaufs (418) bewegte Stauscheibe (419) ist.

4. Saugförderanlage nach einem der Ansprüche 1 bis 3, dadurch gekennzeichnet, daß die obere Kammer (415) aus dein eigentlichen Abscheideraum und dem darunter angeordneten Wiegebehälter (414) besteht.

5. Saugförderanlage nach einein der Ansprüche 1 bis 4, dadurch gekennzeichnet, daß der Abscheidraum ein konisches, in den oben offenen Wiegebehälter (414) hineinragendes Übergangsstück (417) aufweist.

6. Saugförderanlage nach einem der Ansprüche 1 bis 5, dadurch gekennzeichnet, daß der Wiegebehälter (414) an einer Wandung des Abscheiders (41 bis 47) über den Kraftaufnehmer (425) abgestützt ist.

7. Saugförderanlage nach einem der Ansprüche 4 bis 6, dadurch gekennzeichnet, daß dem Wiegebehälter (414) eine Lagerung (426) für die an seinem Ablauf (418) angeordnete Stauscheibe (419) zugeordnet ist.

8. Saugförderanlage nach einem der Ansprüche 4 bis 7, dadurch gekennzeichnet, daß der Stauscheibe (419) ein Antrieb (420) zugeordnet ist.

9. Saugförderanlage nach Anspruch 8, dadurch gekennzeichnet, daß der Antrieb (420) am Abscheider (41) innenseitig fest angebracht und über eine den Wiegebehälter (414) nicht beeinflussende Kupplung (428, 430) mit der Stauscheibe (419) in Wirkverbindung steht.

10. Saugförderanlage nach einem der Ansprüche 1 bis 9, dadurch gekennzeichnet, daß der Abscheider (41 bis 47) von einem im wesentlichen zylindrischen Behälter (421) gebildet ist, der in seinem oberen Bereich die obere Kammer (415) mit dem Abscheideraum und dem Wiegebehälter (414), der konzentrisch in dem Abscheider-Behälter (421) eingesetzt ist, und darunter die untere Kammer (416) aufweist.

11. Saugförderanlage nach einem der Ansprüche 2 bis 10, dadurch gekennzeichnet, daß die untere Kammer (416) einen in den Abscheider-Behälter (421) eingesetzten Trichterboden (410) aufweist, der an seinem unteren Ende von der Pendelklappe (412) verschlossen ist.

12. Saugförderanlage nach einem der Ansprüche 1 bis 11, dadurch gekennzeichnet, daß der Verteiler (1) eine Rohrweiche (5) ist, die wahlweise eine der von den Vorratsbehältern (11 bis 16) kommenden (51 bis 56) mit einer zu den Abscheidern (41 bis 47) führenden Förderleitungen (61 bis 67) verbindet, und daß für letztere ein einziges Belüftungsventil (6) vorgesehen ist, das am Eingang der Rohrweiche (5) angeordnet ist.

## Claims

1. Pneumatic suction conveyor for the gravimetric allocating of different pourable material components to a plurality of requirement stations (21 to 27) with in each case a storage container (11 to 16) containing a single component and which are in each case connected by a feedline (51 to 56) to a distributor (1), with a separator (41 to 47) at each requirement station (21 to 27), which is connected by means of a feedline (61 to 67) to the distributor (1), a suction line (4) with check valves (71 to 77) to a suction fan (2) and by means of a closable discharge opening (411,412) to the requirement station (21 to 27) and with a control for the requirement-dependent allocation of the components to the requirement stations with in each case a requirement indicator (413) which triggers a control signal for setting the distributor (1) to the desired component and for controlling the check valve (71 to 77) and with a setting device responding on reaching a predetermined quantity and which triggers a control signal for opening a vent valve (6; 81 to 86) in the feedline and with a set time lag for closing the check valve (71 to 77), characterized in that each separator comprises two chambers (415,416), whereof the lower chamber (416) has the closable discharge opening (411), whereas the upper chamber has connections for the feedline (61 to 67), the suction line (4) and below same a weighing container (414) receiving the separated material and supported by means of a force gauge (425) and which has a bottom material outlet (418) into the lower chamber (416) and a closure (419) in the form of a baffle member (419) which merely holds back the material without separating the chambers (415,416) in air-tight manner and which can be brought into the closed position when the requirement indicator (413) responds and which can be brought into the open position in the case of the response of the setting device with the set time lag activated by the force gauge (425).

2. Suction conveyor according to claim 1, characterized in that the discharge opening (411) of the lower chamber (416) is associated as the closure with a pendulum flap (412) automatically closing under the action of gravity and which is opened under the action of material located in its movement area and which activates the requirement indicator (413) on closing.

3. Suction conveyor according to claim 1 or 2, characterized in that the baffle member is a baffle plate (419) moved at a limited distance below the material outlet (418).

4. Suction conveyor according to one of the claims 1 to 3, characterized in that the upper chamber (415) comprises the actual separating area and the weighing container (414) located below it.

5. Suction conveyor according to one of the claims 1 to 4, characterized in that the separating area has a conical transition piece (417) projecting into the weighing container (414) which is open at the top.

6. Suction conveyor according to one of the claims 1 to 5, characterized in that the weighing container (414) is supported by means of the force gauge (425) on a wall of the separator (41 to 47).

7. Suction conveyor according to one of the claims 4 to 6, characterized in that with the weighing container (414) is associated a mounting support (426) for the baffle plate (419) located at its outlet (418).

8. Suction conveyor according to one of the claims 4 to 7, characterized in that a drive (420) is associated with the baffle plate (419).

9. Suction conveyor according to claim 8, characterized in that the drive (420) is internally fixed to the separator (41) and is in operative connection with the baffle plate (419) by a coupling (428,430) not influencing the weighing container (414).

10. Suction conveyor according to one of the claims 1 to 9 , characterized in that the separator (41 to 47) is formed by a substantially cylindrical container (421), which in its upper area has the upper chamber (415) with the separating area and the weighing container (414), which is placed concentrically in the separator container (421), and below it the lower chamber (416).

11. Suction conveyor according to one of the claims 2 to 10, characterized in that the lower chamber (416) has a hopper bottom (410) inserted in the separator container (421) and which is closed at its lower end by the pendulum flap (412).

12. Suction conveyor according to one of the claims 1 to 11, characterized in that the distributor (1) is a pipe sorting gate (5) which, as required, connects one of the feedlines (51 to 56) coming from the storage containers (11 to 16) to one of the feedlines (61 to 67) leading to the separators (41 to 47) and that for the feedlines (61 to 67) a single vent valve (6) is provided, which is located at the inlet of the pipe sorting gate (5).

## Revendications

1. Installation pneumatique de transport par aspiration qui, destinée à distribuer par voie gravimétrique divers constituants de matière, aptes à être déversés, à un certain nombre de postes à approvisionner (21 à 27), comprend des récipients de stockage (11 à 16) contenant chacun un constituant et qui sont chacun, par l'intermédiaire d'un conduit transporteur (51 à 56), en communication avec un distributeur (1), un séparateur (41 à 47) qui, disposé respectivement au niveau de chacun des postes à approvisionner (21 à 27), communique par l'intermédiaire d'un conduit transporteur (61 à 67) avec le distributeur (1) et par l'intermédiaire d'un conduit aspirant (4), muni de soupapes d'arrêt (71 à 77), avec un ventilateur aspirant (2) et peut être vidé au niveau du poste à approvisionner (21 à 27), par l'intermédiaire d'une ouverture de décharge (411, 412) susceptible d'être fermée, et un dispositif de commande pour distribuer les constituants, en fonction des besoins, aux postes à approvisionner, avec l'aide d'un indicateur de manque de produit respectif (413) qui déclenche un signal de commande pour régler le distributeur (1) sur le constituant désiré et pour ouvrir la soupape d'arrêt (71 à 77), ainsi qu'un capteur de valeur nominale qui, réagissant au moment où une quantité préétablie est atteinte, déclenche un signal de commande pour ouvrir une valve d'aération (6 ; 81 à 86) dans le conduit transporteur, et une temporisation réglée pour fermer la soupape d'arrêt concernée (71 à 77), caractérisée en ce que chaque séparateur est constitué par deux chambres (415, 416) dont celle inférieure (416) présente l'ouverture de déchargement (411) susceptible d'être fermée, alors que la chambre supérieure présente des raccords pour les conduits transporteurs (61 à 67), le conduit aspirant (4) et, au-dessous de ce dernier, un récipient à pesée (414) qui, recevant la matière séparée et supporté par l'intermédiaire d'un transducteur de force (425), est muni d'une voie d'écoulement (418), située du côté de son fond et destinée à décharger la matière dans la chambre inférieure (416), et d'une fermeture (419) en forme d'un organe de retenue (419) qui seulement retient la matière mais ne sépare les chambres (415, 416) pas de facon étanche à l'air l'une de l'autre et qui peut être amenée, en cas d'entrée en action de l'indicateur de besoin (413), dans la position fermée et, en cas d'entrée en action du capteur des valeur nominale activé par le transducteur de force (425), dans la position ouverte avec la temporisation réglée.

2. Installation de transport par aspiration selon la revendication 1, caractérisée en ce qu'à l'ouverture de déchargement (411) de la chambre inférieure (416) est associé, en tant que fermeture, un volet oscillant (412) se fermant automatiquement sous l'effet de la gravité et qui, sous l'action de la matière située dans sa région de mouvement, s'ouvre et active, lors de sa fermeture, l'indicateur de manque de produit (413).

3. Installation de transport par aspiration selon la revendication 1 ou 2, caractérisée en ce que l'organe de retenue est un disque de retenue (419) pouvant être déplacé à une faible distance au-dessous de la voie de déchargement de matière (418).

4. Installation de transport par aspiration selon l'une quelconque des revendications précédentes, caractérisée en ce que la chambre supérieure (415) est constituée par l'espace de séparation proprement dit et le récipient à pesée (414) disposé au-dessous de ce dernier.

5. Installation de transport par aspiration selon l'une quelconque des revendications précédentes, caractérisée en ce que l'espace de séparation présente une pièce de transition conique (417) faisant saillie dans le récipient à pesée (414) ouvert du côté supérieur.

6. Installation de transport par aspiration selon l'une quelconque des revendications précédentes, caractérisée en ce que le récipient à pesée (414) est supporté au contact d'une paroi du séparateur (41 à 47) par l'intermédiaire du transducteur de force (425).

7. Installation de transport par aspiration selon l'une quelconque des revendications 4 à 6, caractérisée en ce qu'au récipient à pesée (414) est associé un mécanisme de support (426) pour le disque de retenue (419) monté au niveau de sa voie d'écoulement (418).

8. Installation de transport par aspiration selon l'une quelconque des revendications 4 à 7, caractérisée en ce qu'au disque de retenue (419) est associé un mécanisme d'entraînement (420).

9. Installation de transport par aspiration selon la revendication 8, caractérisée en ce que le mécanisme d'entraînement (420) est monté fixe sur le séparateur (41) du côté intérieur de celui-ci et se trouve, par l'intermédiaire d'une liaison (428, 430) n'influençant pas le récipient à pesée (414), en relation de travail avec le disque de retenue (419).

10. Installation de transport par aspiration selon l'une quelconque des revendications précédentes, caractérisée en ce que le séparateur (41 à 47) est constitué par un récipient sensiblement cylindrique (421), lequel présente, dans sa région supérieure la chambre supérieure (415) avec l'espace de séparation et le récipient à pesée (414) qui est mis en place concentriquement dans l'ensemble séparateur-récipient (421) et, au-dessous de ce dernier, la chambre inférieure (416).

11. Installation de transport par aspiration selon l'une quelconque des revendications 2 à 10, caractérisée en ce que la chambre inférieure (416) présente un fond à trémie (410) placé dans l'ensemble séparateur-récipient (421) et qui est fermé à son extrémité inférieure par le volet oscillant (412).

12. Installation de transport par aspiration selon l'une quelconque des revendications précédentes, caractérisée en ce que le distributeur (1) est un aiguillage tubulaire (5) qui sélectivement met l'un des conduits transporteurs (51 à 56), s'étendant à partir des récipients de stockage (11 à 16), en communication avec l'un des conduits transporteurs (61 à 67) menant aux séparateurs (41 à 47) et en ce que pour les conduits transporteurs (61 à 67) est prévu une seule valve d'aération (6) qui est montée à l'entrée de l'aiguillage tubulaire (5).
